# FASCICULE DE BREVET EUROPEEN

(11) **EP 2 725 722 B1**
(45) Date de publication et mention de la délivrance du brevet: **20.05.2015**
(21) Numéro de dépôt: 13189547.6
(22) Date de dépôt: 21.10.2013
(51) Int. Cl.: H04B 7/185

(54) **Procédé et système de détection de signaux de diffusion émis par des sources terrestres et reçus par un satellite**
Verfahren und Anordnung zur Erkennung von Rundfunksignalen übertragen von irdischen Quellen und empfangen durch einen Satelliten.
Method and system for detecting broadcast signals transmitted by terrestrial sources and received by a satellite.

(30) Priorité: 23.10.2012 FR 1202823
(43) Date de publication de la demande: 30.04.2014
(73) Titulaire: Airbus Defence and Space SAS, 78130 Les Mureaux (FR)
(72) Inventeur: Picard, Mathieu, 31500 Toulouse (FR); Mege, Alexandre, 92340 Bourg-La-Reine (FR)
(74) Mandataire: Ribeiro Dias, Alexandre

(56) Documents cités:
- EP-A1- 2 315 366
- EP-A2- 2 302 821
- EP-A2- 2 362 555
- WO-A1-2008/148188

## Description

### DOMAINE TECHNIQUE

La présente invention concerne un procédé et un système de détection de signaux de diffusion émis par des sources terrestres, dans des signaux élémentaires issus respectivement de différentes antennes élémentaires d'une antenne réseau.

La présente invention trouve une application particulièrement avantageuse, bien que nullement limitative, pour la détection de signaux AIS (« Automatic Identification System ») émis par des navires et/ou la détection de signaux ADS-B (« Automatic Dependent Surveillance-Broadcast ») émis par des aéronefs et reçus par une antenne réseau d'un satellite en orbite terrestre.

### ÉTAT DE LA TECHNIQUE

De nos jours, la plupart des navires et des aéronefs diffusent leur position, auto-déterminée par exemple au moyen de récepteurs GPS, par l'intermédiaire de signaux respectivement AIS et ADS-B.

De tels signaux AIS et ADS-B peuvent être reçus par respectivement des navires et des aéronefs à proximité, pour éviter des collisions avec lesdits navires et aéronefs à proximité, ainsi que par des stations au sol pour gérer le trafic respectivement maritime et aérien.

Il est également envisagé d'équiper des satellites en orbite terrestre de moyens adaptés à recevoir des signaux AIS et/ou ADS-B afin de permettre la collecte desdits signaux AIS et/ou ADS-B dans des zones géographiques ne pouvant pas être couvertes, ou du moins difficilement, par des stations au sol (voir par exemple le document WO 2007/143478 pour les signaux AIS, le document EP 2263225 pour les signaux ADS-B).

Toutefois, de tels satellites couvrent alors des zones géographiques beaucoup plus étendues que les stations au sol conventionnelles, de sorte que le nombre de navires et/ou d'aéronefs dont les signaux AIS et/ou ADS-B sont susceptibles d'être reçus simultanément est beaucoup plus important pour un tel satellite que pour une station au sol conventionnelle.

Ainsi, de nombreuses collisions de signaux AIS et/ou ADS-B sont susceptibles de se produire au niveau d'un satellite, en particulier si la zone géographique observée est dense, de sorte que de nombreux signaux AIS et/ou ADS-B ne seront pas détectés.

Afin de détecter des signaux AIS reçus simultanément par un satellite en orbite défilante, il est connu d'exploiter l'effet Doppler. En effet, du fait du défilement du satellite, les signaux AIS reçus pourront être reçus avec des décalages fréquentiels induits par effet Doppler, décalages qui seront tantôt positifs tantôt négatifs suivant que le satellite se rapproche ou s'éloigne des navires ayant émis ces signaux AIS. Un filtrage fréquentiel adapté permet donc dans certains cas de distinguer des signaux AIS reçus simultanément.

Dans le cas signaux ADS-B, l'effet Doppler est toutefois négligeable et ne permet pas de distinguer des signaux ADS-B reçus simultanément.

Il est également connu, dans le domaine des applications spatiales, d'utiliser des antennes réseau comportant une pluralité d'antennes élémentaires, et de former des faisceaux de directions principales de rayonnement respectives différentes. Ainsi, les zones géographiques couvertes par chacun des faisceaux sont moins étendues, ce qui tend à limiter les collisions entre signaux reçus simultanément. Toutefois, le nombre de collisions reste important dans le cas de signaux AIS et/ou ADS-B, en particulier dans les zones géographiques observées denses.

### EXPOSÉ DE L'INVENTION

La présente invention a pour objectif de remédier à tout ou partie des limitations des solutions de l'art antérieur, notamment celles exposées ci-avant, en proposant une solution qui permette d'améliorer la détection de signaux de diffusion, en particulier des signaux AIS et/ou ADS-B, même lorsque de nombreux signaux de diffusion sont reçus simultanément.

A cet effet, et selon un premier aspect, l'invention concerne un procédé de détection de signaux de diffusion, émis par des sources terrestres et reçus par un satellite, dans des signaux élémentaires issus respectivement de différentes antennes élémentaires d'une antenne réseau du satellite. Le procédé de détection comporte une première itération de détection et une seconde itération de détection, chacune desdites première et seconde itérations de détection comportant une étape de formation, à partir des signaux élémentaires, de faisceaux virtuels de directions principales de rayonnement respectives différentes, et une étape de recherche de la présence de signaux de diffusion dans les faisceaux virtuels. En outre, pour au moins un signal de diffusion détecté au cours de la première itération de détection, les contributions respectives dudit au moins un signal de diffusion détecté aux différents signaux élémentaires sont atténuées, par rapport à ladite première itération de détection, pour tout ou partie des faisceaux virtuels formés au cours de la seconde itération de détection.

Le procédé de détection repose sur la formation de faisceaux virtuels de directions principales de rayonnement respectives différentes.

On entend par « faisceaux virtuels » que lesdits faisceaux sont formés de manière différée (par opposition à une formation en temps réel). Les signaux élémentaires sont par conséquent d'abord mémorisés, et peuvent ensuite être utilisés pour calculer autant de faisceaux virtuels que nécessaire.

La formation d'un faisceau virtuel permet d'atténuer les signaux de diffusion, reçus dans des directions de rayonnement différentes de la direction principale de rayonnement dudit faisceau virtuel, par rapport aux signaux de diffusion reçus dans ladite direction principale de rayonnement. Ainsi, les interférences causées par les signaux de diffusion, reçus dans des directions de rayonnement différentes de la direction principale de rayonnement d'un faisceau virtuel, sont réduites, et la détection des signaux de diffusion reçus dans ladite direction principale de rayonnement dudit faisceau virtuel est facilitée.

Le procédé de détection repose en outre sur l'atténuation, de préférence pour tous les faisceaux virtuels formés au cours de la seconde itération de détection, des contributions respectives d'au moins un signal de diffusion, préalablement détecté, aux différents signaux élémentaires.

Ainsi, les interférences causées par tout ou partie des signaux de diffusion détectés au cours de la première itération de détection sont réduites pour les faisceaux virtuels formés au cours de la seconde itération de détection, de sorte que la détection d'autres signaux de diffusion, présents dans les signaux élémentaires et auparavant masqués, sera facilitée.

Dans des modes particuliers de mise en oeuvre, le procédé de détection comporte l'une ou plusieurs des caractéristiques suivantes, prises isolément ou selon toutes les combinaisons techniquement possibles.

Dans un mode particulier de mise en oeuvre, la première itération de détection comporte, pour chaque signal de diffusion détecté dans les faisceaux virtuels, des étapes de :
- estimation des contributions respectives dudit signal de diffusion détecté aux différents signaux élémentaires,
- suppression des contributions respectives dudit signal de diffusion détecté dans les différents signaux élémentaires,
et, au cours de la seconde itération de détection, au moins un faisceau virtuel est formé à partir des signaux élémentaires obtenus après suppression des contributions des signaux de diffusion détectés au cours de la première itération de détection.

Du fait que les contributions de chaque signal de diffusion détecté sont estimées et supprimées directement dans les signaux élémentaires issus des antennes élémentaires, les faisceaux virtuels formés ultérieurement au cours de la seconde itération de détection bénéficieront d'une diminution des interférences, même s'ils sont de directions principales de rayonnement différentes de celles des faisceaux virtuels formés au cours de la première itération de détection. Ainsi, le procédé de détection pourra bénéficier d'une grande diversité de faisceaux virtuels formés, tout en bénéficiant d'une diminution des interférences dans les nouveaux faisceaux virtuels formés, à mesure que des signaux de diffusion ont été détectés dans des faisceaux virtuels préalablement formés.

Dans un mode particulier de mise en oeuvre, l'étape d'estimation des contributions respectives d'un signal de diffusion détecté aux différents signaux élémentaires comporte des étapes de :
- estimation d'un signal démodulé à partir dudit signal de diffusion détecté,
- estimation d'une direction d'arrivée et d'une amplitude d'arrivée, sur l'antenne réseau, dudit signal de diffusion détecté,
- calcul des contributions respectives dudit signal de diffusion détecté aux différents signaux élémentaires, en fonction du signal démodulé, de la direction d'arrivée et de l'amplitude d'arrivée dudit signal de diffusion détecté.

Dans un mode particulier de mise en oeuvre, le procédé de détection comporte, pour chaque signal de diffusion détecté, l'estimation en outre de la polarisation linéaire d'arrivée dudit signal de diffusion détecté sur l'antenne réseau, les contributions respectives du signal de diffusion détecté aux différents signaux élémentaires étant calculées en outre en fonction de ladite polarisation linéaire d'arrivée.

Dans un mode particulier de mise en oeuvre, lorsqu'un signal de diffusion a été détecté, un faisceau virtuel est formé dans la direction d'arrivée et/ou la polarisation linéaire d'arrivée dudit signal de diffusion détecté pour estimer le signal démodulé. De telles dispositions permettent d'améliorer l'estimation du signal démodulé, et par conséquent d'améliorer l'estimation des contributions respectives dudit signal de diffusion détecté.

Dans un mode particulier de mise en oeuvre, le procédé de détection comporte, pour chaque signal de diffusion détecté, l'estimation en outre d'une fréquence d'arrivée et/ou d'un instant d'arrivée dudit signal de diffusion détecté sur l'antenne réseau, les contributions respectives dudit signal de diffusion détecté aux différents signaux élémentaires étant calculées en outre en fonction de la fréquence d'arrivée et/ou de l'instant d'arrivée.

Dans un mode particulier de mise en oeuvre, au cours de la seconde itération de détection, les faisceaux virtuels formés sont des faisceaux virtuels prédéfinis de directions principales de rayonnement différentes des directions principales de rayonnement des faisceaux virtuels formés au cours de la première itération de détection.

Dans un mode particulier de mise en oeuvre, au cours de la seconde itération de détection, les faisceaux virtuels formés sont des faisceaux virtuels prédéfinis de polarisations linéaires différentes des polarisations linéaires des faisceaux virtuels formés au cours de la première itération de détection.

Dans un mode particulier de mise en oeuvre, les faisceaux virtuels formés au cours de la seconde itération de détection sont des faisceaux virtuels adaptatifs déterminés en fonction des signaux de diffusion détectés au cours de la première itération de détection.

Dans un mode particulier de mise en oeuvre, les faisceaux virtuels adaptatifs formés au cours de la seconde itération de détection sont orthogonaux aux directions principales de rayonnement respectives et/ou aux polarisations linéaires respectives d'au moins une partie des faisceaux virtuels, formés au cours de la première itération de détection, dans lesquels des signaux de détection ont été détectés.

Dans un mode particulier de mise en oeuvre, la première itération de détection comporte, pour chaque signal de diffusion détecté dans les faisceaux virtuels, une étape d'estimation d'une direction d'arrivée et/ou d'une polarisation linéaire d'arrivée, sur l'antenne réseau, dudit signal de diffusion détecté, et les faisceaux virtuels adaptatifs formés au cours de la seconde itération de détection sont orthogonaux aux directions d'arrivée respectives et/ou orthogonaux aux polarisations linéaires d'arrivée respectives d'au moins une partie des signaux de diffusion détectés au cours de la première itération de détection.

Dans un mode particulier de mise en oeuvre, les signaux de diffusion sont des signaux AIS émis par des navires et/ou des signaux ADS-B émis par des aéronefs.

Dans un mode particulier de mise en oeuvre, la direction d'arrivée d'un signal de diffusion détecté est estimée en fonction d'une information, incluse dans ledit signal de diffusion, relative à la position de la source terrestre ayant émis ledit signal de diffusion détecté.

Dans un mode particulier de mise en oeuvre, au cours des au moins deux itérations de détection, des faisceaux virtuels de polarisations linéaires respectives différentes sont formés.

Selon un second aspect, l'invention concerne un produit programme d'ordinateur comportant un ensemble d'instructions de code de programme qui, lorsqu'elles sont exécutées par un processeur, mettent en oeuvre un procédé de détection conforme à l'invention.

Selon un troisième aspect, l'invention concerne un dispositif de traitement comportant des moyens adaptés à mettre en oeuvre un procédé de détection conforme à l'invention.

Selon un quatrième aspect, l'invention concerne un système de détection de signaux de diffusion émis par des sources terrestres comportant au moins un satellite en orbite terrestre et au moins un dispositif de traitement terrestre conforme à l'invention. En outre, le satellite comporte une antenne réseau comportant une pluralité d'antennes élémentaires, des moyens adaptés à émettre tout ou partie des signaux élémentaires, issus respectivement des différentes antennes élémentaires, à destination du dispositif de traitement. Le dispositif de traitement comporte des moyens adaptés à recevoir lesdits signaux élémentaires émis par le satellite.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un exemple de réalisation d'un système de détection de signaux de diffusion,
- Figure 2 : un diagramme illustrant un exemple de mise en oeuvre d'un procédé de détection,
- Figure 3 : des courbes illustrant les performances de la détection de signaux de diffusion.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

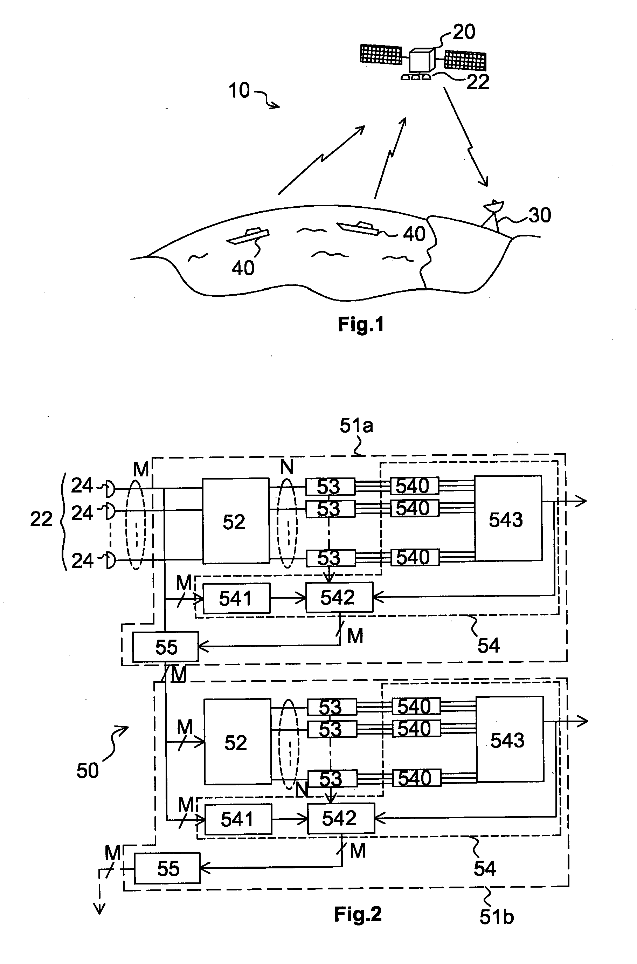

La figure 1 représente schématiquement un système 10 de détection de signaux de diffusion émis par des sources 40 terrestres.

Dans la suite de la description, on se place de manière non limitative dans le cas où les sources 40 terrestres sont des navires, et où les signaux de diffusion émis par lesdits navires sont des signaux AIS.

Rien n'exclut suivant d'autres exemples, de considérer d'autres types de sources terrestres et de signaux de diffusion, par exemples des signaux ADS-B émis par des aéronefs. Avantageusement, le système 10 de détection peut être mis en oeuvre pour détecter plusieurs types de signaux de diffusion, par exemple à la fois des signaux AIS et des signaux ADS-B.

Le système 10 de détection comporte un satellite 20 en orbite terrestre. Il est à noter que toute orbite adaptée peut être considérée, par exemple une orbite basse LEO (« Low Earth Orbit »), une orbite moyenne MEO (« Medium Earth Orbit »), etc.

Le système 10 de détection illustré par la figure 1 comporte un seul satellite 20. Rien n'exclut, suivant d'autres exemples, d'avoir un système 10 de détection comportant plusieurs tels satellites 20 en orbite terrestre.

Le satellite 20 comporte une antenne réseau 22 comportant une pluralité d'antennes élémentaires 24 adaptées à recevoir les signaux AIS émis par les navires 40. Dans la suite de la description, on désigne par M le nombre d'antennes élémentaires 24.

En pratique, plusieurs signaux AIS sont susceptibles d'être reçus simultanément par les différentes antennes élémentaires 24 de l'antenne réseau 22. Ainsi, chaque antenne élémentaire 24 de l'antenne réseau 22 fournit un signal élémentaire qui peut s'avérer être un signal composite regroupant notamment plusieurs signaux AIS émis par des navires 40 différents et reçus au cours d'un même intervalle d'acquisition.

Le satellite 20 comporte également des moyens conventionnels adaptés à émettre tout ou partie des signaux élémentaires, issus respectivement des différentes antennes élémentaires 24, à destination d'un dispositif 30 de traitement terrestre, qui comporte des moyens conventionnels adaptés à recevoir lesdits signaux élémentaires émis par le satellite 20.

Le dispositif 30 de traitement comporte des moyens configurés pour détecter les signaux AIS dans les signaux élémentaires reçus du satellite 20, issus respectivement des différentes antennes élémentaires 24, conformément à un procédé 50 de détection décrit plus en détail ci-après.

Le dispositif 30 de traitement comporte à cet effet une unité de traitement des signaux élémentaires qui se présente par exemple sous la forme d'un processeur et d'une mémoire électronique dans laquelle est mémorisé un produit programme d'ordinateur, sous la forme d'un ensemble d'instructions de code de programme qui, lorsqu'elles sont exécutées par le processeur, mettent en oeuvre tout ou partie des étapes du procédé 50 de détection de signaux AIS. Dans une variante, l'unité de traitement comporte des circuits logiques programmables, de type FPGA, PLD, etc., et/ou des circuits intégrés spécialisés (ASIC), adaptés à mettre en oeuvre tout ou partie des étapes dudit procédé 50 de détection de signaux AIS.

La figure 2 représente les principales étapes d'un procédé 50 de détection selon un mode particulier de mise en oeuvre.

Tel qu'illustré par la figure 2, un procédé 50 de détection selon l'invention comporte au moins deux itérations de détection : une première itération de détection 51 a et une seconde itération de détection 51 b.

Les étapes principales de chacune desdites première 51 a et seconde 51 b itérations de détection sont les suivantes :
- 52 formation, à partir des signaux élémentaires issus des antennes élémentaires 24 du satellite 20, de faisceaux virtuels de directions principales de rayonnement respectives différentes,
- 53 recherche de la présence de signaux AIS dans les faisceaux virtuels.

Ainsi, dans son principe général, un procédé 50 de détection repose sur la formation de faisceaux virtuels.

Un faisceau correspond à un diagramme de rayonnement particulier de l'antenne réseau 22, et est formé de manière conventionnelle en combinant les signaux élémentaires en utilisant un jeu particulier de coefficients de pondération. Ainsi. Il est possible de former, à partir des signaux élémentaires, des faisceaux de directions principales de rayonnement respectives différentes en utilisant des jeux de coefficients de pondération différents.

On entend par « faisceaux virtuels » que lesdits faisceaux sont formés de manière différée (par opposition à une formation en temps réel). Les signaux élémentaires sont par conséquent d'abord mémorisés, et peuvent ensuite être utilisés pour former autant de faisceaux virtuels que nécessaire.

Dans le mode particulier de mise en oeuvre illustré par la figure 2, on se place de manière non limitative dans le cas où un même nombre N de faisceaux virtuels sont formés à la fois au cours de la première itération de détection 51a et au cours de la seconde itération de détection 51b. Rien n'exclut, suivant d'autres exemples, de former des nombres de faisceaux virtuels différents au cours des première 51a et seconde 51b itérations de détection.

Au cours de l'étape 52 de formation de faisceaux virtuels de la première itération de détection 51a, les faisceaux virtuels sont des faisceaux virtuels prédéfinis, de directions principales de rayonnement régulièrement réparties dans un champ de vue radioélectrique de l'antenne réseau 22.

On entend par « faisceaux virtuels prédéfinis », que les coefficients de pondération considérés pour chaque faisceau virtuel sont statiques et connus à l'avance. Une telle formation de faisceaux virtuels est connue dans la littérature anglo-saxonne sous le nom de « conventional beamforming ».

Au cours de l'étape 52 de formation de faisceaux virtuels de la seconde itération de détection 51 b, les faisceaux virtuels peuvent être, suivant le mode de mise en oeuvre considéré, des faisceaux virtuels prédéfinis (« conventional beamforming ») et/ou des faisceaux virtuels adaptatifs.

On entend par « faisceaux virtuels adaptatifs », que les coefficients de pondération considérés pour chaque faisceau virtuel sont dynamiques et déterminés en fonction de paramètres non connus à l'avance, par exemple en fonction des signaux AIS détectés au cours de la première itération de détection 51 a. Une telle formation de faisceaux virtuels est connue dans la littérature anglo-saxonne sous le nom de « adaptive beamforming ».

L'étape 53 de recherche de signaux AIS est exécutée pour chacun des N faisceaux virtuels formés au cours de chacune desdites première 51a et seconde 51 b itérations de détection. Ladite recherche de signaux AIS peut être réalisée de manière conventionnelle.

En outre, pour au moins un signal AIS détecté au cours de la première itération de détection 51a, les contributions respectives dudit au moins un signal AIS détecté aux différents signaux élémentaires sont atténuées, par rapport à ladite première itération de détection, pour tout ou partie des faisceaux virtuels formés au cours de la seconde itération de détection 51 b.

Préférentiellement, les contributions respectives d'un signal AIS détecté aux différents signaux élémentaires sont atténuées dans tous les faisceaux virtuels formés au cours de la seconde itération de détection 51 b selon l'une et/ou l'autre des façons suivantes :
- en estimant et en supprimant lesdites contributions respectives dans les différents signaux élémentaires, les faisceaux virtuels étant formés au cours de la seconde itération de détection 51 b à partir des signaux élémentaires obtenus après suppression, et/ou
- en formant, au cours de la seconde itération de détection 51 b, des faisceaux virtuels adaptatifs déterminés en fonction dudit signal AIS détecté de telle sorte que les contributions respectives dudit signal AIS détecté se combinent de manière destructive dans lesdits faisceaux virtuels adaptatifs de la seconde itération de détection 51b.

Dans le mode particulier de mise en oeuvre illustré par la figure 2, on considère de manière nullement limitative le cas où les contributions respectives d'au moins un signal AIS détecté aux M signaux élémentaires sont estimées au cours d'une étape 54, et supprimées dans lesdits signaux élémentaires au cours d'une étape 55, avant formation des faisceaux virtuels au cours de la seconde itération de détection 51 b.

Préférentiellement, une telle estimation / suppression des contributions respectives d'un signal AIS détecté aux signaux élémentaires est réalisée pour chaque signal AIS détecté au cours de la première itération.

Par exemple, l'étape 54 d'estimation des contributions respectives d'un signal AIS détecté comporte des étapes de :
- 540 estimation d'un signal démodulé à partir du signal AIS détecté dans un faisceau virtuel,
- 541 estimation d'une direction d'arrivée et d'une amplitude d'arrivée, sur l'antenne réseau 22, dudit signal AIS détecté,
- 542 calcul des M contributions respectives dudit signal AIS détecté aux M signaux élémentaires, en fonction du signal démodulé, de la direction d'arrivée et de l'amplitude d'arrivée du signal AIS détecté.

L'amplitude d'arrivée estimée est de préférence une amplitude complexe, c'est-à-dire englobant une information sur une phase d'arrivée, sur l'antenne réseau 22, dudit signal AIS détecté.

L'étape 540 d'estimation du signal démodulé à partir du signal AIS détecté peut être réalisée de façon conventionnelle, par démodulation dudit signal AIS détecté conformément au format prédéfini de modulation des données binaires incluses dans les signaux AIS. Le signal démodulé est alors une estimation des données binaires incluses dans ledit signal AIS détecté. De manière connue, lesdites données binaires incluses dans un signal AIS comportent en principe un champ de contrôle de redondance cyclique (« Cyclic Redundancy Check » ou CRC) permettant de détecter des erreurs dans les données binaires reçues. Avantageusement, le CRC est utilisé pour confirmer que le signal détecté est bien un signal AIS, le signal détecté n'étant considéré comme étant un signal AIS que si le décodage du CRC indique qu'il n'y a pas d'erreurs dans les données binaires reçues.

Il est à noter qu'il est également possible, lorsqu'un signal AIS a été détecté dans un faisceau virtuel, de former, toujours au cours de la première itération de détection 51a, un nouveau faisceau virtuel de direction principale de rayonnement confondue avec la direction d'arrivée dudit signal AIS détecté. Ainsi, l'estimation du signal démodulé sera améliorée du fait que le gain d'antenne réseau 22 sera maximal dans ladite direction d'arrivée dudit signal AIS détecté.

L'étape 541 d'estimation de la direction d'arrivée et de l'amplitude d'arrivée du signal AIS détecté peut mettre en oeuvre des procédés considérés comme à la portée de l'homme de l'art.

Par exemple, la direction d'arrivée peut être estimée au moyen de l'algorithme MUSIC (« Multiple Signal Classifier ») ou au moyen de l'algorithme ESPRIT (« Estimation of Signal Parameters via Rotational Invariant Techniques »), tous deux basés sur le calcul d'une matrice de covariance à partir des M signaux élémentaires.

Dans une variante préférée, la direction d'arrivée du signal AIS détecté sur l'antenne réseau 22 est estimée en fonction d'une information, incluse dans ledit signal AIS détecté, sur la position du navire 40 ayant émis ledit signal AIS détecté. En effet, il est connu qu'un signal AIS intègre les coordonnées GPS du navire 40 l'ayant émis, de sorte que la direction d'arrivée de ce signal AIS sur l'antenne réseau 22 du satellite 20 peut être estimée dès lors que la position et l'attitude du satellite 20 sont également connues.

Par exemple, l'amplitude d'arrivée du signal AIS détecté est estimée dans le faisceau virtuel formé au cours de la première itération de détection 51a dont la direction principale de rayonnement est la plus proche de la direction d'arrivée estimée dudit signal AIS détecté. L'amplitude d'arrivée du signal AIS détecté dans les M signaux élémentaires peut alors être estimée à partir :
- de l'amplitude d'arrivée dudit signal AIS détecté dans le faisceau virtuel considéré,
- du gain complexe de l'antenne réseau 22, pour le faisceau virtuel considéré, dans la direction d'arrivée dudit signal AIS détecté.

Ensuite les contributions respectives du signal AIS détecté peuvent être régénérées, au cours de l'étape 542, à partir du signal démodulé, de la direction d'arrivée et de l'amplitude d'arrivée dudit signal AIS détecté.

On dispose alors des M contributions respectives dudit signal AIS détecté aux M signaux élémentaires, qui sont retranchées auxdits signaux élémentaires au cours de l'étape 55 de suppression.

En supprimant ainsi, dans les signaux élémentaires, les contributions de tout ou partie des signaux AIS détectés, la détection de nouveaux signaux AIS, auparavant masqués par les signaux AIS détectés, sera facilitée au cours de la seconde itération de détection 51 b.

De préférence, et tel qu'illustré par la figure 2, le procédé 50 de détection comporte, au cours de l'étape 54 de recherche de signaux AIS dans les faisceaux virtuels formés, une étape 543 de détermination si un même signal AIS a été détecté dans plusieurs faisceaux virtuels. Si un même signal AIS est détecté dans plusieurs faisceaux virtuels, les contributions respectives dudit signal AIS détecté dans plusieurs faisceaux virtuels ne sont alors régénérées et supprimées qu'une seule fois dans les signaux élémentaires.

La détermination si un même signal AIS a été détecté dans plusieurs faisceaux virtuels peut mettre en oeuvre des procédés considérés comme à la portée de l'homme de l'art. Par exemple, il est possible de comparer les signaux démodulés obtenus dans des faisceaux virtuels différents. En effet, des signaux démodulés obtenus dans des faisceaux virtuels différents, s'ils correspondent à un même signal AIS, doivent théoriquement contenir des données binaires identiques.

Dans des modes particuliers de mise en oeuvre, le procédé 50 de détection comporte également, pour chaque signal AIS détecté dont on cherche à estimer les contributions respectives aux signaux élémentaires, l'estimation d'une fréquence d'arrivée et/ou d'un instant d'arrivée dudit signal AIS détecté sur l'antenne réseau 22. Les contributions respectives dudit signal AIS détecté aux différents signaux élémentaires sont régénérées en fonction également de ladite fréquence d'arrivée et/ou dudit instant d'arrivée.

De telles dispositions permettent d'améliorer la précision de la régénération des contributions des signaux AIS détectés, car lesdites contributions pourront alors être recalées fréquentiellement (en tenant compte notamment des éventuels décalages fréquentiels induits par effet Doppler) et temporellement avec l'ensemble des signaux élémentaires.

L'estimation de la fréquence d'arrivée et/ou de l'instant d'arrivée peut mettre en oeuvre des procédés de synchronisation fréquentielle et/ou temporelle considérés comme à la portée de l'homme de l'art, et est de préférence effectuée dans le faisceau virtuel ayant conduit à la détection du signal AIS considéré. Une telle estimation peut être réalisée au cours de l'étape 53 de recherche de signaux AIS et/ou au cours de l'étape 540 d'estimation du signal démodulé.

Dans le mode particulier de mise en oeuvre illustré par la figure 2, les faisceaux virtuels, au cours de la seconde itération de détection 51 b, sont formés à partir des M signaux élémentaires obtenus après suppression des contributions respectives des signaux AIS détectés au cours de la première itération de détection 51 a.

Dans un tel cas, les faisceaux virtuels formés au cours de la seconde itération de détection 51b peuvent être des faisceaux virtuels prédéfinis (« conventional beamforming ») et/ou adaptatifs (« adaptive beamforming »).

Dans un mode préféré de mise en oeuvre, les faisceaux virtuels formés au cours de la seconde itération de détection 51 b sont des faisceaux virtuels prédéfinis de directions principales de rayonnement différentes des directions principales de rayonnement des faisceaux virtuels formés au cours de la première itération de détection 51 a.

Par exemple, en considérant un champ de vue radioélectrique de l'antenne réseau 22 s'étendant entre -30° et 30°, et en considérant un nombre N de faisceaux virtuels formés égal à six, il est possible de former :
- au cours de la première itération de détection 51 a : des faisceaux virtuels de directions principales de rayonnement respectives -30°, -20°, -10°, 0°, 10°et 20°,
- au cours de la seconde itération de détection 51 b : des faisceaux virtuels de directions principales de rayonnement respectives -25°, -15°, -5°, 5°, 15° et 25°.

En variante ou en complément, il est possible de former, au cours de la seconde itération de détection 51b, des faisceaux virtuels adaptatifs déterminés en fonction des signaux AIS détectés au cours de la première itération de détection 51 a.

Suivant un exemple non limitatif, les faisceaux virtuels adaptatifs formés au cours de la seconde itération de détection 51 b sont orthogonaux aux directions d'arrivée respectives d'au moins une partie des signaux AIS détectés au cours de la première itération de détection.

Par « orthogonal à la direction d'arrivée d'un signal AIS », on entend que le diagramme de rayonnement de l'antenne réseau 22 pour le faisceau virtuel considéré présente dans ladite direction d'arrivée un minimum local. Ledit minimum local est tel que, dans ladite direction d'arrivée, le faisceau virtuel présente un gain d'antenne réseau 22 inférieur d'au moins 20 décibels (dB) par rapport au gain d'antenne réseau 22 dans la direction principale de rayonnement dudit faisceau virtuel, voire inférieur d'au moins 30 dB.

Il est à noter que le nombre M d'antennes élémentaires 24 limite le nombre de directions d'arrivée auxquelles un faisceau virtuel peut être orthogonal. En théorie, il est possible de former (M-1) directions aveugles dans un faisceau virtuel, une direction aveugle étant une direction dans laquelle aucun signal ne peut être reçu (connu sous le nom de « null steering » dans la littérature anglo-saxonne). On comprend donc qu'il ne sera pas forcément possible de former un faisceau virtuel orthogonal aux directions d'arrivée de tous les signaux AIS détectés, si ceux-ci sont trop nombreux.

Dans un tel cas, on formera de préférence des faisceaux virtuels orthogonaux aux directions d'arrivée des signaux AIS détectés dont les puissances mesurées étaient les plus élevées et/ou des signaux AIS détectés dans plusieurs faisceaux virtuels de la première itération de détection 51 a. Dans une variante, il est possible de former des faisceaux virtuels orthogonaux aux directions principales de rayonnement respectives d'au moins une partie des faisceaux virtuels dans lesquels plusieurs signaux AIS ont été détectés au cours de la première itération de détection 51 a.

Il est à noter que le procédé 50 de détection peut comporter plus que deux itérations de détection. Dans l'exemple non limitatif illustré par la figure 2, la seconde itération de détection 51b comporte alors avantageusement, comme la première itération de détection 51 a, des étapes 54 d'estimation et 55 de suppression des contributions des signaux AIS détectés au cours de la seconde itération de détection 51 b. Les signaux élémentaires ainsi obtenus sont utilisés pour la formation de faisceaux virtuels au cours d'une troisième itération de détection, etc.

Dans la suite de la description, on considère un mode particulier de réalisation de l'antenne réseau 22, dans lequel chaque antenne élémentaire est adaptée à mesurer les signaux reçus suivant deux polarisations linéaires distinctes, de préférence orthogonales. Ainsi. Il est possible de former, à partir des signaux élémentaires, des faisceaux virtuels de directions principales de rayonnement et/ou de polarisations linéaires respectives différentes en utilisant des jeux de coefficients de pondération différents.

Dans un tel cas, des faisceaux virtuels de polarisations linéaires respectives différentes sont de préférence formés au cours de la première itération de détection 51a et/ou au cours de la seconde itération de détection 51b, par exemple régulièrement réparties dans un champ de vue radioélectrique de l'antenne réseau 22.

Les signaux AIS sont émis avec une polarisation linéaire verticale. En se propageant, un signal AIS va conserver une polarisation sensiblement linéaire, mais celle-ci va tourner. Par conséquent, les signaux AIS sont tous reçus avec une polarisation sensiblement linéaire, mais dont l'orientation va pouvoir varier d'un signal AIS reçu à un autre. En formant des faisceaux virtuels de polarisations linéaires différentes, il sera par conséquent possible de distinguer des signaux AIS reçus avec des polarisations linéaires différentes.

Dans un mode préféré de mise en oeuvre, des polarisations linéaires différentes sont considérées d'une itération de détection à une suivante.

Par exemple, les faisceaux virtuels formés au cours de la seconde itération de détection 51 b sont des faisceaux virtuels prédéfinis de polarisations linéaires différentes des polarisations linéaires des faisceaux virtuels formés au cours de la première itération de détection 51 a.

En variante ou en complément, lorsque des faisceaux virtuels adaptatifs sont formés au cours de la seconde itération de détection 51 b, ceux-ci sont par exemple orthogonaux aux polarisations linéaires d'arrivée respectives d'au moins une partie des signaux AIS détectés au cours de la première itération de détection.

Par « orthogonal à la polarisation linéaire d'arrivée d'un signal AIS », on entend que la polarisation linéaire du faisceau virtuel considéré est orthogonale à la polarisation linéaire d'arrivée dudit signal AIS.

Si le nombre de signaux AIS détectés est trop important, on pourra former des faisceaux virtuels orthogonaux aux polarisations linéaires d'arrivée des signaux AIS détectés dont les puissances mesurées étaient les plus élevées et/ou orthogonaux aux polarisations linéaires d'arrivée des signaux AIS détectés dans plusieurs faisceaux virtuels de la première itération de détection 51a. Dans une variante, il est possible de former des faisceaux virtuels orthogonaux aux polarisations linéaires respectives d'au moins une partie des faisceaux virtuels dans lesquels plusieurs signaux AIS ont été détectés au cours de la première itération de détection 51 a.

Dans le cas illustré par la figure 2 où les contributions respectives d'au moins un signal AIS détecté aux M signaux élémentaires sont estimées au cours d'une étape 54, et supprimées dans lesdits signaux élémentaires au cours d'une étape 55, les M contributions respectives dudit signal AIS détecté aux M signaux élémentaires sont de préférence calculées en outre en fonction de la polarisation linéaire d'arrivée dudit signal AIS détecté, par exemple estimée au cours de l'étape 541 d'estimation.

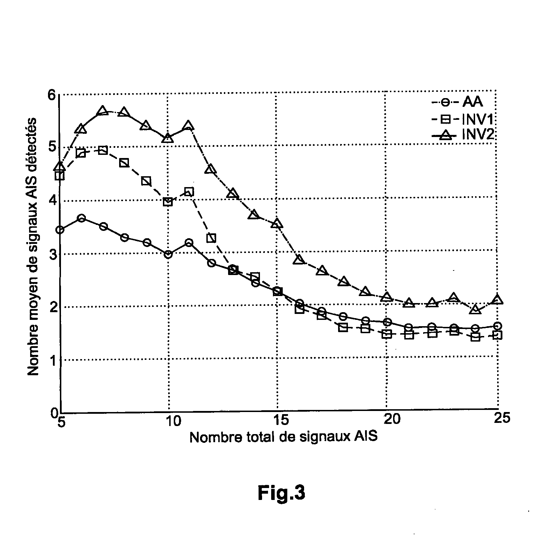

La figure 3 représente des courbes, obtenues par simulation, illustrant les performances de la détection de signaux AIS de plusieurs procédés de détection. Plus particulièrement, la figure 3 représente le nombre moyen de signaux AIS détectés en fonction du nombre total de signaux AIS présents dans des signaux élémentaires, dans le cas d'une antenne réseau 22 comportant cinq antennes élémentaires 24 espacées d'une longueur d'onde, chacune desdites antennes élémentaire 24 étant à double polarisation linéaire (horizontale et verticale).

Trois courbes sont représentées, illustrant les résultats obtenus pour trois procédés de détection différents : un procédé de détection selon l'art antérieur et deux procédés de détection selon à l'invention.

A des fins de comparaison, le même nombre total de faisceaux virtuels formés a été considéré pour les trois procédés de détection, afin de se placer à complexité de calcul sensiblement équivalente. En l'occurrence, 72 faisceaux virtuels ont été formés en tout pour l'obtention de chacune des courbes représentées sur la figure 3.

Dans le procédé de détection selon l'art antérieur, 12 directions principales de rayonnement ont été considérées (de -30° à 25° par pas de 5°) et, pour chaque direction principale de rayonnement, 6 polarisations linéaires différentes (de 0° à 150° par pas de 30°). Les résultats obtenus correspondent à la courbe désignée par « AA » sur la figure 3.

Les procédés 50 de détection selon l'invention, considérés pour l'obtention des résultats représentés sur la figure 3, comportent tous deux 4 itérations de détection et sont tous deux basés sur l'estimation / suppression des signaux AIS détectés dans les signaux élémentaires, les signaux élémentaires obtenus après suppression étant considérés pour la formation de faisceaux virtuels au cours de l'itération de détection suivante.

Dans le premier procédé 50 de détection selon l'invention considéré (dont les résultats obtenus correspondent à la courbe désignée par « INV1 »), les mêmes faisceaux virtuels sont formés au cours des quatre itérations de détection. Plus particulièrement, 6 directions principales de rayonnement ont été considérées (de -30° à 20° par pas de 10°) et, pour chaque direction principale de rayonnement, 3 polarisations linéaires différentes (0°, 60°, 120°).

Dans le second procédé 50 de détection selon l'invention considéré (dont les résultats obtenus correspondent à la courbe désignée par « INV2 »), des faisceaux virtuels différents sont formés au cours des quatre itérations de détection. Pour chaque itération de détection, 6 directions principales de rayonnement ont été considérées et, pour chaque direction principale de rayonnement, 3 polarisations linéaires différentes. Plus particulièrement, on a considéré :
- au cours de la première itération de détection : les directions principales de rayonnement de -30° à 20° par pas de 10° et, pour chaque direction principale de rayonnement, les polarisations linéaires 0°, 60° et 120°,
- au cours de la seconde itération de détection : les directions principales de rayonnement de -25° à 25° par pas de 10° et, pour chaque direction principale de rayonnement, les polarisations linéaires 0°, 60°et 120°,
- au cours de la troisième itération de détection : les directions principales de rayonnement de -30° à 20° par pas de 10° et, pour chaque direction principale de rayonnement, les polarisations linéaires 30°, 90°et 150°,
- au cours de la quatrième itération de détection : les directions principales de rayonnement de -25° à 25° par pas de 10° et, pour chaque direction principale de rayonnement, les polarisations linéaires 30°, 90°et 150°.

Tel qu'illustré par la figure 3, lorsque le nombre total de signaux AIS présents dans les signaux élémentaires est compris entre 5 et 10, le nombre de signaux AIS détectés en mettant en oeuvre les premier et second procédés 50 de détection selon l'invention est très supérieur au nombre de signaux AIS détectés en mettant en oeuvre le procédé de détection selon l'art antérieur (amélioration de l'ordre de 60%).

La figure 3 illustre également l'intérêt de former des faisceaux virtuels différents d'une itération de détection à une suivante. En effet le nombre de signaux AIS détectés en mettant en oeuvre le second procédé 50 de détection selon l'invention est toujours supérieur au nombre de signaux AIS détectés en mettant en oeuvre le premier procédé 50 de détection selon l'invention (amélioration de l'ordre de 20% lorsque le nombre total de signaux AIS présents dans les signaux élémentaires est compris entre 5 et 10).

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant que le dispositif 30 de traitement était au sol. Rien n'exclut, suivant d'autres exemples, d'embarquer directement ledit dispositif 30 de traitement dans le satellite 20, c'est-à-dire que le satellite 20 mette en oeuvre les différentes étapes d'un procédé 50 de détection selon à l'invention. Dans un tel cas, le satellite 20 émet à destination d'une station au sol les signaux AIS détectés et/ou des informations extraites desdits signaux AIS détectés.

## Revendications

1. Procédé (50) de détection de signaux de diffusion, émis par des sources (40) terrestres et reçus par un satellite (20), dans des signaux élémentaires issus respectivement de différentes antennes élémentaires (24) d'une antenne réseau (22) du satellite (20), **caractérisé en ce que** :
- ledit procédé comporte une première itération de détection (51 a) et une seconde itération de détection (51b), chacune desdites première et seconde itérations de détection comportant une étape (52) de formation, à partir des signaux élémentaires, de faisceaux virtuels de directions principales de rayonnement respectives différentes, et une étape (53) de recherche de la présence de signaux de diffusion dans les faisceaux virtuels,
- pour au moins un signal de diffusion détecté au cours de la première itération de détection (51a), les contributions respectives dudit au moins un signal de diffusion détecté aux différents signaux élémentaires sont atténuées, par rapport à ladite première itération de détection, pour tout ou partie des faisceaux virtuels formés au cours de la seconde itération de détection (51 b).

2. Procédé (50) selon la revendication 1, **caractérisé en ce que** la première itération de détection comporte, pour chaque signal de diffusion détecté dans les faisceaux virtuels, des étapes de :
- (54) estimation des contributions respectives dudit signal de diffusion détecté aux différents signaux élémentaires,
- (55) suppression des contributions respectives dudit signal de diffusion détecté dans les différents signaux élémentaires,
et **en ce que**, au cours de la seconde itération de détection (51b), au moins un faisceau virtuel est formé à partir des signaux élémentaires obtenus après suppression des contributions des signaux de diffusion détectés au cours de la première itération de détection (51 a).

3. Procédé (50) selon la revendication 2, **caractérisé en ce que** l'étape (54) d'estimation des contributions respectives d'un signal de diffusion détecté aux différents signaux élémentaires comporte des étapes de :
- (540) estimation d'un signal démodulé à partir dudit signal de diffusion détecté,
- (541) estimation d'une direction d'arrivée et d'une amplitude d'arrivée, sur l'antenne réseau, dudit signal de diffusion détecté,
- (542) calcul des contributions respectives dudit signal de diffusion détecté aux différents signaux élémentaires, en fonction du signal démodulé, de la direction d'arrivée et de l'amplitude d'arrivée dudit signal de diffusion détecté.

4. Procédé (50) selon la revendication 3, **caractérisé en ce qu'il** comporte, pour chaque signal de diffusion détecté, l'estimation en outre de la polarisation linéaire d'arrivée dudit signal de diffusion détecté sur l'antenne réseau (22), les contributions respectives dudit signal de diffusion détecté aux différents signaux élémentaires étant calculées en outre en fonction de ladite polarisation linéaire d'arrivée.

5. Procédé (50) selon l'une des revendications 3 à 4, **caractérisé en ce que**, lorsqu'un signal de diffusion a été détecté, un faisceau virtuel est formé dans la direction d'arrivée et/ou la polarisation linéaire d'arrivée dudit signal de diffusion détecté pour estimer le signal démodulé.

6. Procédé (50) selon l'une des revendications 3 à 5, **caractérisé en ce qu'il** comporte, pour chaque signal de diffusion détecté, l'estimation en outre d'une fréquence d'arrivée et/ou d'un instant d'arrivée dudit signal de diffusion détecté sur l'antenne réseau (22), les contributions respectives dudit signal de diffusion détecté aux différents signaux élémentaires étant calculées en outre en fonction de la fréquence d'arrivée et/ou de l'instant d'arrivée.

7. Procédé (50) selon l'une des revendications précédentes, **caractérisé en ce que**, au cours de la seconde itération de détection (51b), les faisceaux virtuels formés sont des faisceaux virtuels prédéfinis de directions principales de rayonnement et/ou de polarisations linéaires différentes des directions principales de rayonnement et/ou des polarisations linéaires des faisceaux virtuels formés au cours de la première itération de détection (51 a).

8. Procédé (50) selon l'une des revendications 1 à 6, **caractérisé en ce que** les faisceaux virtuels formés au cours de la seconde itération de détection (51b) sont des faisceaux virtuels adaptatifs déterminés en fonction des signaux de diffusion détectés au cours de la première itération de détection (51 a).

9. Procédé (50) selon la revendication 8, **caractérisé en ce que** les faisceaux virtuels adaptatifs formés au cours de la seconde itération de détection (51b) sont orthogonaux aux directions principales de rayonnement respectives et/ou aux polarisations linéaires respectives d'au moins une partie des faisceaux virtuels, formés au cours de la première itération de détection (51 a), dans lesquels des signaux de diffusion ont été détectés.

10. Procédé (50) selon la revendication 8, **caractérisé en ce que** la première itération de détection (51a) comporte, pour chaque signal de diffusion détecté dans les faisceaux virtuels, une étape (541) d'estimation d'une direction d'arrivée et/ou d'une polarisation linéaire d'arrivée, sur l'antenne réseau (22), dudit signal de diffusion détecté, et **en ce que** les faisceaux virtuels adaptatifs formés au cours de la seconde itération de détection (51b) sont orthogonaux aux directions d'arrivée respectives et/ou orthogonaux aux polarisations linéaires d'arrivée respectives d'au moins une partie des signaux de diffusion détectés au cours de la première itération de détection (51a).

11. Procédé (50) selon l'une des revendications précédentes, **caractérisé en ce que** les signaux de diffusion sont des signaux AIS émis par des navires et/ou des signaux ADS-B émis par des aéronefs.

12. Procédé (50) selon la revendication 11, **caractérisé en ce que** la direction d'arrivée d'un signal de diffusion détecté est estimée en fonction d'une information, incluse dans ledit signal de diffusion, relative à la position de la source (40) terrestre ayant émis ledit signal de diffusion détecté.

13. Produit programme d'ordinateur, **caractérisé en ce qu'il** comporte un ensemble d'instructions de code de programme qui, lorsqu'elles sont exécutées par un processeur, mettent en oeuvre un procédé (50) de détection selon l'une des revendications précédentes.

14. Dispositif (30) de traitement **caractérisé en ce qu'il** comporte des moyens configurés pour détecter des signaux de diffusion dans des signaux élémentaires, issus respectivement de différentes antennes élémentaires (24) d'une antenne réseau (22) d'un satellite (20), conformément à un procédé selon l'une des revendications 1 à 12.

15. Système (10) de détection de signaux de diffusion émis par des sources (40) terrestres, **caractérisé en ce qu'il** comporte au moins un satellite (20) en orbite terrestre et au moins un dispositif (30) de traitement terrestre selon la revendication 14, ledit satellite (20) comportant :
- une antenne réseau (22) comportant une pluralité d'antennes élémentaires (24),
- des moyens adaptés à émettre tout ou partie des signaux élémentaires, issus respectivement des différentes antennes élémentaires (24), à destination du dispositif (30) de traitement,
le dispositif (30) de traitement comportant des moyens adaptés à recevoir lesdits signaux élémentaires émis par le satellite (20).

## Patentansprüche

1. Verfahren (50) zur Erfassung von Übertragungssignalen, die von terrestrischen Quellen (40) ausgestrahlt, und von einem Satelliten (20) empfangen werden, in elementaren Signalen aus jeweils verschiedenen elementaren Antennen (24) einer Netzantenne (22) des Satelliten (20), **dadurch gekennzeichnet, dass**:
- das besagte Verfahren eine erste Detektions-Iteration (51 a) und eine zweite Detektions-Iteration (51 b) umfasst, wobei jede der besagten ersten und zweiten Detektions-Iterationen einen Schritt (52) zur Bildung von virtuellen Bündeln jeweils unterschiedlicher Hauptstrahlungsrichtungen aus den elementaren Signalen umfasst, und einen Schritt (53) zur Suche nach vorhandenen Übertragungssignalen in den virtuellen Bündeln,
- für zumindest ein im Laufe der ersten Detektions-Iteration (51a) erfasstes Übertragungssignal die jeweiligen Beiträge des besagten zumindest einen Übertragungssignals zu den verschiedenen elementaren Signalen in Bezug zur besagten ersten Detektions-Iteration für alle, oder einen Teil der virtuellen Bündel abgeschwächt werden, die im Laufe der zweiten Detektions-Iteration (51 b) gebildet werden.

2. Verfahren (50) nach Anspruch 1, **dadurch gekennzeichnet, dass** die erste Detektions-Iteration für jedes in den virtuellen Bündeln erfasste Übertragungssignal die folgenden Schritte umfasst:
- (54) die Einschätzung der jeweiligen Beiträge des besagten in den verschiedenen elementaren Signalen erfassten Übertragungssignals,
- (55) die Beseitigung der jeweiligen Beiträge des besagten in den verschiedenen elementaren Signalen erfassten Übertragungssignals,
und dadurch, dass im Laufe der zweiten Detektions-Iteration (51 b) zumindest ein virtuelles Bündel aus den erhaltenen elementaren Signalen gebildet wird, nachdem die Beiträge der im Laufe der ersten Detektions-Iteration (51 a) erfassten Übertragungssignale beseitigt worden sind.

3. Verfahren (50) nach Anspruch 2, **dadurch gekennzeichnet, dass** der Schritt (54) zur Einschätzung der jeweiligen Beiträge eines erfassten Übertragungssignals zu den verschiedenen elementaren Signalen die folgenden Schritte umfasst:
- (540) die Einschätzung eines aus dem besagten erfassten Übertragungssignal demodulierten Signals,
- (541) die Einschätzung einer Einlaufrichtung und einer Einlaufamplitude des besagten erfassten Übertragungssignals auf der Netzantenne,
- (542) die Berechnung der jeweiligen Beiträge des besagten Übertragungssignals zu den verschiedenen elementaren Signalen in Abhängigkeit vom demodulierten Signal, von der Einlaufrichtung und von der Einlaufamplitude des besagten erfassten Übertragungssignals.

4. Verfahren (50) nach Anspruch 3, **dadurch gekennzeichnet, dass** es für jedes erfasste Übertragungssignal darüber hinaus die Einschätzung der linearen Einlaufpolarisierung des besagten auf der Netzantenne (22) erfassten Übertragungssignals umfasst, wobei die jeweiligen Beiträge des besagten erfassten Übertragungssignals zu den verschiedenen elementaren Signalen darüber hinaus in Abhängigkeit von der besagten linearen Einlaufpolarisierung berechnet werden.

5. Verfahren (50) nach einem der Ansprüche 3 bis 4, **dadurch gekennzeichnet, dass**, wenn ein Übertragungssignal erfasst wurde, ein virtuelles Bündel in die Einlaufrichtung und/ oder die lineare Einlaufpolarisierung des besagten erfassten Übertragungssignals gebildet wird, um das demodulierte Signal einzuschätzen.

6. Verfahren (50) nach einem der Ansprüche 3 bis 5, **dadurch gekennzeichnet, dass** es für jedes erfasste Übertragungssignal darüber hinaus die Einschätzung einer Einlauffrequenz und/ oder einer Einlaufzeit des besagten auf der Netzantenne (22) erfassten Übertragungssignals umfasst, wobei die jeweiligen Beiträge des besagten erfassten Übertragungssignals zu den verschiedenen elementaren Signalen darüber hinaus in Abhängigkeit von der Einlauffrequenz und/ oder der Einlaufzeit berechnet werden.

7. Verfahren (50) nach einem der vorherigen Ansprüche, **dadurch gekennzeichnet, dass** die im Laufe der zweiten Detektions-Iteration (51b) geformten virtuellen Bündel vordefinierte virtuelle Bündel von Hauptstrahlungsrichtungen und/ oder von linearen Polarisierungen der virtuellen Bündel sind, die im Laufe der ersten Detektions-Iteration (51 a) gebildet werden.

8. Verfahren (50) nach einem der Ansprüche 1 bis 6, **dadurch gekennzeichnet, dass** die im Laufe der zweiten Detektions-Iteration (51b) geformten virtuellen Bündel adaptive virtuelle Bündel sind, die in Abhängigkeit von den Übertragungssignalen bestimmt werden, die im Laufe der ersten Detektions-Iteration (51 a) erfasst wurden.

9. Verfahren (50) nach Anspruch 8, **dadurch gekennzeichnet, dass** die adaptiven virtuellen Bündel, die im Laufe der zweiten Detektions-Iteration (51 b) geformt werden, orthogonal zu den jeweiligen Hauptstrahlungsrichtungen und/ oder zu den jeweiligen linearen Polarisierungen zumindest eines Teils der virtuellen Bündel sind, die im Laufe der ersten Detektions-Iteration (51a) geformt wurden, in denen Übertragungssignale erfasst worden sind.

10. Verfahren (50) nach Anspruch 8, **dadurch gekennzeichnet, dass** die erste Detektions-Iteration (51 a) für jedes in den virtuellen Bündeln erfasste Übertragungssignal einen Schritt (541) zur Einschätzung einer Einlaufrichtung und/ oder einer linearen Einlaufpolarisierung auf der Netzantenne (22) des besagten erfassten Übertragungssignals umfasst, und dadurch, dass die adaptiven virtuellen Bündel, die im Laufe der zweiten Detektions-Iteration (51 b) geformt werden, orthogonal zu den jeweiligen Einlaufrichtungen und/ oder orthogonal zu den linearen Einlaufpolarisierungen zumindest eines Teils der Übertragungssignale sind, die im Laufe der ersten Detektions-Iteration (51a) erfasst worden sind.

11. Verfahren (50) nach einem der vorherigen Ansprüche, **dadurch gekennzeichnet, dass** die Übertragungssignale AIS Signale sind, die von Schiffen ausgesandt werden und/ oder ADS-B Signale, die von Luftfahrzeugen ausgesandt werden.

12. Verfahren (50) nach Anspruch 11, **dadurch gekennzeichnet, dass** die Einlaufrichtung eines erfassten Übertragungssignals in Abhängigkeit von einer Information, die im besagten Übertragungssignal enthalten ist, in Bezug auf die terrestrische Quelle (40) eingeschätzt wird, die das besagte erfasste Übertragungssignal ausgesandt hat.

13. Computerprogrammprodukt, **dadurch gekennzeichnet, dass** es eine Einheit an Programmcode-Befehlen umfasst, die, wenn sie von einem Prozessor ausgeführt werden, ein Verfahren (50) zur Erfassung nach einem der vorherigen Ansprüche umsetzen.

14. Bearbeitungsvorrichtung (30), **dadurch gekennzeichnet, dass** sie Mittel umfasst, die konfiguriert sind, um Übertragungssignale in den elementaren Signalen zu erfassen, die aus jeweils verschiedenen elementaren Antennen (24) einer Netzantenne (22) des Satelliten (20) gemäß einem Verfahren nach einem der Ansprüche 1 bis 12 stammen.

15. System (10) zur Erfassung von Übertragungssignalen, die von terrestrischen Quellen (40) ausgestrahlt werden, **dadurch gekennzeichnet, dass** es zumindest einen Satelliten (20) in der Erdumlaufbahn und zumindest eine terrestrische Bearbeitungsvorrichtung (30) nach Anspruch 14 umfasst, wobei der besagte Satellit (20) folgendes umfasst:
- eine Netzantenne (22), eine Vielzahl von elementaren Antennen (24) umfassend,
- Mittel, die sich dazu eignen, alle elementaren Signale oder einen Teil davon, die jeweils aus verschiedenen elementaren Antennen (24) stammen, in Richtung der Bearbeitungsvorrichtung (30) zu entsenden,
wobei die Bearbeitungsvorrichtung (30) geeignete Mittel umfasst, um die besagten elementaren Signale zu empfangen, die vom Satelliten (20) ausgesandt worden sind.

## Claims

1. A method (50) for detecting broadcast signals, transmitted by terrestrial sources (40) and received by a satellite (20), in individual signals respectively from different individual antennas (24) of an antenna array (22) of the satellite (20), **characterized in that**:
- said method comprises a first detection iteration (51a) and a second detection iteration (51 b), each of said first and second detection iterations comprising a step (52) of forming, from the individual signals, virtual beams of different respective main radiation directions, and a step (53) of searching for the presence of broadcast signals in the virtual beams,
- for at least one broadcast signal detected during the first detection iteration (51 a), the respective contributions of said at least one detected broadcast signal to the different individual signals are attenuated, relative to said first detection iteration, for all or part of the virtual beams formed during the second detection iteration (51 b).

2. The method (50) as claimed in claim 1, **characterized in that** the first detection iteration comprises, for each broadcast signal detected in the virtual beams, steps of:
- (54) estimating the respective contributions of said detected broadcast signal to the different individual signals,
- (55) suppressing the respective contributions of said detected broadcast signal in the different individual signals,
and **in that**, during the second detection iteration (51 b), at least one virtual beam is formed from the individual signals obtained after suppression of the contributions of the broadcast signals detected during the first detection iteration (51 a).

3. The method (50) as claimed in claim 2, **characterized in that** the step (54) of estimating the respective contributions of a detected broadcast signal to the different individual signals comprises steps of:
- (540) estimating a demodulated signal from said detected broadcast signal,
- (541) estimating a direction of arrival and an amplitude of arrival, on the antenna array, of said detected broadcast signal,
- (542) computing the respective contributions of said detected broadcast signal to the different individual signals, as a function of the demodulated signal, of the direction of arrival and of the amplitude of arrival of said detected broadcast signal.

4. The method (50) as claimed in claim 3, **characterized in that** it comprises, for each detected broadcast signal, the estimation also of the linear polarization of arrival of said detected broadcast signal on the antenna array (22), the respective contributions of said detected broadcast signal to the different individual signals being also computed as a function of said linear polarization of arrival.

5. The method (50) as claimed in one of claims 3 to 4, **characterized in that**, when a broadcast signal has been detected, a virtual beam is formed in the direction of arrival and/or the linear polarization of arrival of said detected broadcast signal to estimate the demodulated signal.

6. The method (50) as claimed in one of claims 3 to 5, **characterized in that** it comprises, for each detected broadcast signal, the estimation also of a frequency of arrival and/or of an instant of arrival of said detected broadcast signal on the antenna array (22), the respective contributions of said detected broadcast signal to the different individual signals being also computed as a function of the frequency of arrival and/or of the instant of arrival.

7. The method (50) as claimed in one of the preceding claims, **characterized in that**, during the second detection iteration (51b), the virtual beams formed are predefined virtual beams of main radiation directions and/or of linear polarizations different from the main radiation directions and/or linear polarizations of the virtual beams formed during the first detection iteration (51 a).

8. The method (50) as claimed in one of claims 1 to 6, **characterized in that** the virtual beams formed during the second detection iteration (51 b) are adaptive virtual beams determined as a function of the broadcast signals detected during the first detection iteration (51 a).

9. The method (50) as claimed in claim 8, **characterized in that** the adaptive virtual beams formed during the second detection iteration (51 b) are orthogonal to the respective main radiation directions and/or to the respective linear polarizations of at least a part of the virtual beams, formed during the first detection iteration (51 a), in which broadcast signals have been detected.

10. The method (50) as claimed in claim 8, **characterized in that** the first detection iteration (51 a) comprises, for each broadcast signal detected in the virtual beams, a step (541) of estimating a direction of arrival and/or of a linear polarization of arrival, on the antenna array (22), of said detected broadcast signal, and **in that** the adaptive virtual beams formed during the section detection iteration (51 b) are orthogonal to the respective directions of arrival and/or orthogonal to the respective linear polarizations of arrival of at least a part of the broadcast signals detected during the first detection iteration (51 a).

11. The method (50) as claimed in one of the preceding claims, **characterized in that** the broadcast signals are AIS signals transmitted by ships and/or ADS-B signals transmitted by aircraft.

12. The method (50) as claimed in claim 11, **characterized in that** the direction of arrival of a detected broadcast signal is estimated as a function of information, included in said broadcast signal, relating to the position of the terrestrial source (40) having transmitted said detected broadcast signal.

13. A computer program product comprising a set of program code instructions which, when they are executed by a processor, implement a detection method (50) as claimed in one of the preceding claims.

14. A processing device (30) **characterized in that** it comprises means configured to detect broadcast signals in individual signals, obtained respectively from different individual antennas (24) of an antenna array (22) of a satellite (20), in accordance with a method as claimed in one of claims 1 to 12.

15. A system (10) for detecting broadcast signals transmitted by terrestrial sources (40), **characterized in that** it comprises at least one satellite (20) in earth orbit and at least one terrestrial processing device (30) as claimed in claim 14, said satellite (20) comprising:
- an antenna array (22) comprising a plurality of individual antennas (24),
- means adapted to transmit all or part of the individual signals, obtained respectively from the different individual antennas (24), to the processing device (30),
the processing device (30) comprising means adapted to receive said individual signals transmitted by the satellite (20).
